# EUROPEAN PATENT SPECIFICATION

(11) **EP 0 548 383 B1**
(45) Date of publication and mention of the grant of the patent: **28.09.1994**
(21) Application number: 91121890.7
(22) Date of filing: 20.12.1991
(51) Int. Cl.: A22C 25/12, B65G 47/256

(54) **Fish feed apparatus and method**
Vorrichtung und Verfahren zum Zuführen von Fischen
Dispositif et méthode d'alimentation de poisson

(43) Date of publication of application: 30.06.1993
(73) Proprietor: FRISCO-FINDUS AG, CH-9400 Rorschach (CH)
(72) Inventor: Pegoraro, Giuliano, S-267 00 BJUV (SE); Wadell, Lars Gustaf Albert, S-262 33 Aengelholm (SE)

(56) References cited:
- WO-A-83/01020
- AU-B- 440 971
- DE-A- 4 034 930
- DE-A- 4 038 078
- DE-C- 865 525
- FR-A- 1 423 344
- FR-A- 2 363 380
- FR-A- 2 492 786
- FR-A- 2 638 613
- GB-A- 704 282
- US-A- 1 649 304
- US-A- 1 967 228

## Description

The present invention relates to a machine and method for aligning fish, such as cod, and orienting them in the same direction in single file.

Fish usually arrive at the factory in kits of 60 which comprises fish of various sizes and weights and it is necessary to grade them either by length or weight before further processing. At the present time, the alignment and feeding of fish to a grading system is carried out manually, an operation which is slow and tiring and results in a feed rate of only about 30 fish/minute.

FR-A-1423344 describes a method and machine according to the preambles of claims 1 and 7 for aligning and orientating fish in the same direction in single file.

We have now devised an automatic method for aligning fish using a shuffle feed apparatus which can result in greatly increased feed rates when compared with the manual operation. Shuffle feed apparatus are well known for the handling of fruit and vegetable products to control the feed rate to a processing station and they utilise parallel-positioned feed members which are reciprocated back and forth in opposite directions in a wave action to align articles received in bulk random form in single file order along their leading edges.

Accordingly, the present invention provides a machine for orientating fish in the same direction according to claim 1, comprising
a conveyor for receiving fish aligned and discharged in single file,
a sensor for detecting the direction of orientation of the fish on the conveyor, and means controlled by the sensor to orientate the fish in the same direction characterised in that a means for the aligning and discharging of the fish in single file is provided by a shuffle feed apparatus and the means controlled by the sensor to orientate the fish in the same direction is provided by a pivotable reversible conveyor and two chutes sloping forwards from its upstream and downstream ends respectively to a further conveyor below, the pivotable conveyor being adapted to tilt backwards or forwards about a transverse axis and to reverse the conveying direction when tilted backwards.

The shuffle feed apparatus is advantageously provided with specially designed feed upper faces for carrying fish and is conveniently mounted in a hopper adapted to contain the fish.

The conveyor for receiving the discharged fish is conveniently positioned adjacent the leading edge of the shuffle feed apparatus and may be, for instance, a V-shaped belt. Advantageously, an acceleration belt is positioned downstream of the conveyor for receiving the discharged fish to space the fish from one another.

The sensor advantageously comprises two photocells one above the other, the lower one of which is activated when the downstream end of the fish passes and the upper one of which is activated when the uppermost point of the fish i.e. the head end, passes the sensor. If the fish passes the photocells with the head end orientated first, then the photocells are activated almost simultaneously, whereas when the fish passes the photocells with the tail end orientated first the lower photocell is activated well before the upper photocell. A control device records this time difference and activates the means to orientate the fish in the same direction accordingly.

The machine is adapted to ensure that only one fish at a time is oriented by the pivotable reversible conveyor. It will be appreciated that the fish orientated in the desired direction on the pivotable reversible conveyor fall off the downstream end front end first onto the respective chute and remain orientated in the desired direction when they fall off the chute onto the further conveyor below whereas the fish orientated in the wrong direction on the conveyor i.e. with the head at the rear will fall off the upstream end of the pivotable conveyor rear end first i.e. head first, onto the other chute so that they become reorientated in the desired direction on the chute and when they fall off the chute onto the further conveyor below.

Preferably, all the conveyors used in the invention are endless belts.

The present invention also provides a method according to claim 7 for aligning and orientating fish in the same direction in single file which comprises aligning and discharging the fish in single file onto a conveyor, detecting the direction of orientation of the fish on the conveyor by means of a sensor and orientating the fish in the same direction by a means controlled by the sensor characterised in that a shuffle feed apparatus aligns and discharges the fish in single file onto the conveyor and that a pivotable reversible conveyor with two chutes sloping forwards from its upstream and downstream ends respectively to a further conveyor below provides the means for orientating the fish in the same direction, the pivotable conveyor being controlled by the sensor and tilting backwards or forwards about a transverse axis and reversing the conveying direction when tilting backwards.

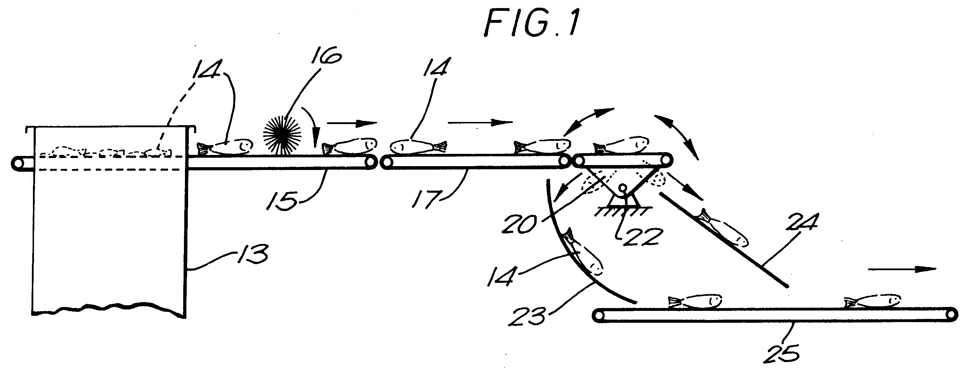

The present invention will now be further described by way of example with reference to the accompanying drawings in which
Figure 1 represents a schematic side sectional view of the machine according to the present invention,

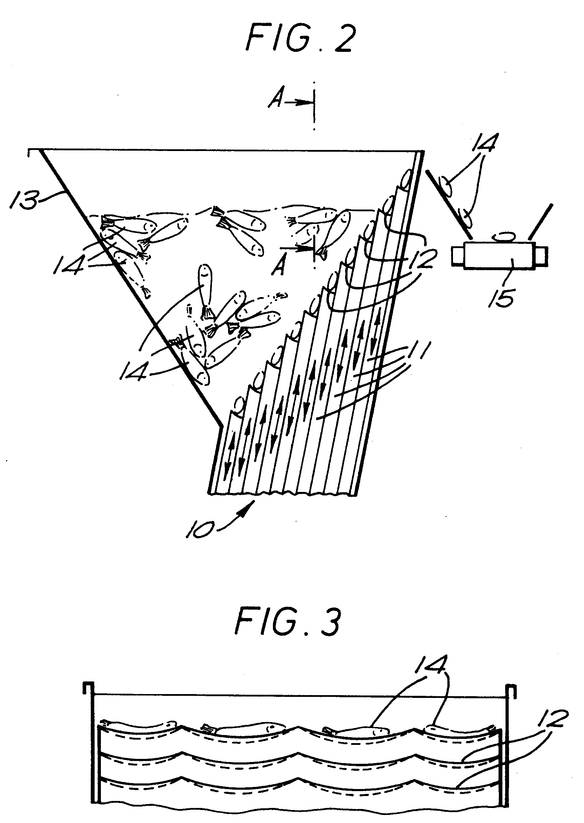

Figure 2 represents a schematic side sectional view of a shuffle feed apparatus in a hopper containing fish,
Figure 3 is a sectional view taken along the line A-A of Figure 2 looking in the direction of the arrows,
Figure 4 is schematic side view of the sensor and the means for orientating the fish in the same direction, and
Figure 5 is a schematic side view illustrating the sensor in more detail.

Referring to the drawings, the machine comprises a shuffle feed apparatus 10 provided with specially designed feed members 11 in rows of four provided with specially shaped upper faces 12 adapted to accomodate fish in a hopper 13 for receiving fish 14 in a bulk random form. Positioned adjacent the hopper just below the row of upper feed members 11 is an endless conveyor belt 15 above which is a rotating brush 16. Downstream of the conveyor belt 15 is an acceleration belt 17 with a pair of photocells 18, 19 positioned at the downstream end. A pivotable reversible endless conveyor belt 20 with an upper run 21 and pivoted at point 22 is positioned downstream of the acceleration belt 17 and chutes 23 and 24 slope forwards from the upstream and downstream ends respectively of the pivotable reversible belt 20 the lower ends of which lie above a conveyor belt 25.

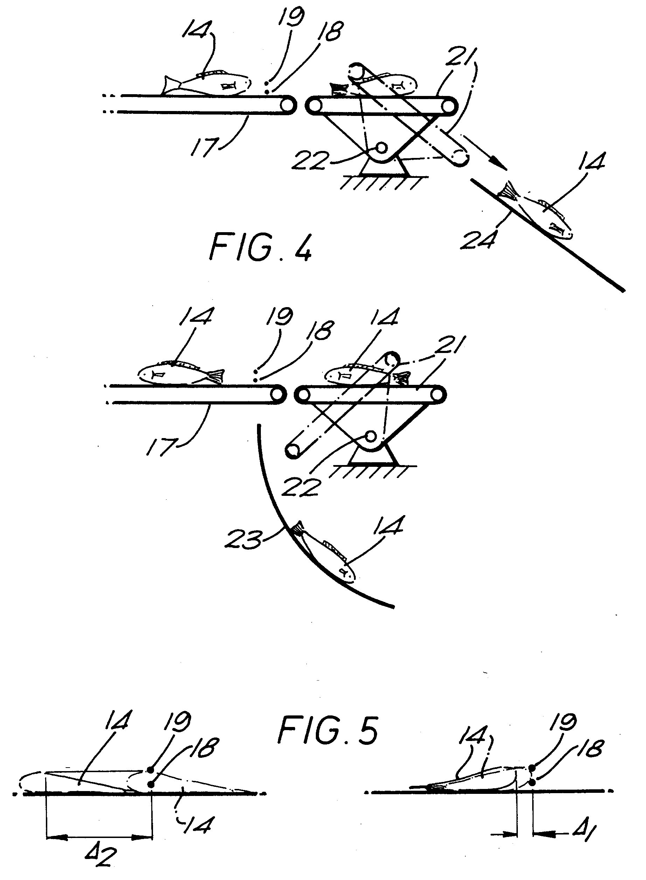

In operation, codfish 14 are fed unto the hopper 13 in bulk random form. The feed members 11 of the shuffle feed apparatus 10 are reciprocated along paths parallel to each other in opposite directions as indicated by the arrows in a wave action so that the codfish are alternately pushed up the side of the next feed member by the face of the last and adjacent feed member so as to advance the codfish 14 on the upper faces 12 from where they are discharged in rows of four over the top edge of the hopper onto the conveyor 15. They are then transported beneath the rotating brush 16 which serves to separate and straigthen them so as to align them in single file and then on to the acceleration belt 17 to space them from each other. At the downstream end of the acceleration belt 17 photocell 18 is activated when the front end of the fish passes it and photocell 19 is activated when the uppermost part of the codfish i.e. the head, passes it. It can be seen from Figures 4 to 5 that when the codfish travels head end first, photocells 18 and 19 are activated almost simultaneously and the time difference Δ1 is very short whereas when the codfish travels tail end first, photocell 18 is activated much earlier than the photocell 19 and the time difference Δ2 is longer. These time differences are recorded by a control device (not shown) which activates the pivotable reversible endless conveyor belt 20 to pivot about pivot 22 so that the upper run 21 tilts forwards or backwards according to the time difference. The operation to orientate all the codfish head end first is as follows. If a codfish is travelling head end first past the photocells, because of the short time difference Δ1 recorded, the control device activates the pivotable belt 20 to pivot clockwise in the drawings so that the upper run 21 tilts forwards enabling the codfish 12 to fall off the downstream end onto the chute 24 along which it slides until it lands on the conveyor belt 25 still with its head end first. If a codfish is travelling tail end first past the photocells, because of the longer time difference recorded, the control device activates the pivotable belt 20 to pivot anticlockwise in the drawings so that the upper run 21 tilts backwards and in addition the conveying direction is reversed enabling the codfish 12 to fall off the upstream end head end first onto the chute 23 along which it slides until it lands on the conveyor belt 25 still with its head end first.

The process continues to ensure that all the codfish are orientated head end first and they are then fed to a grading machine or for further processing.

## Claims

1. A machine for orientating fish (14) in the same direction comprising
a conveyor (15, 17) for receiving fish (14) aligned and discharged in single file,
a sensor (18, 19) for detecting the direction of orientation of the fish (14) on the conveyor (15, 17), and means (20) controlled by the sensor (18, 19) to orientate the fish (14) in the same direction characterised in that a means for the aligning and discharging of the fish in single file is provided by a shuffle feed apparatus (10) and the means controlled by the sensor to orientate the fish in the same direction is provided by a pivotable reversible conveyor (20) and two chutes (23, 24) sloping forwards from its upstream and downstream ends respectively to a further conveyor (25) below,
the pivotable conveyor (20) being adapted to tilt backwards or forwards about a transverse axis and to reverse the conveying direction when tilted backwards.

2. A machine according to claim 1 wherein the shuffle feed apparatus (10) is provided with specially designed feed members for carrying fish.

3. A machine according to claim 1 wherein the shuffle feed apparatus (10) is mounted in a hopper (13).

4. A machine according to claim 1 wherein an acceleration belt (17) is positioned downstream of the conveyor for receiving the discharged fish aligned in single file.

5. A machine according to claim 1 wherein the sensor comprises two photocells (18, 19) one above the other the lower one of which is activated when the downstream end of the fish passes and the upper one of which is activated when the uppermost point of the fish passes the sensor.

6. A machine according to claim 5 wherein a control device is provided for recording the time difference between the activation of the two photocells (18, 19) and for activating the means (20) to orientate the fish in the same direction accordingly.

7. A method for aligning and orientating fish (14) in the same direction in single file which comprises aligning and discharging the fish in single file onto a conveyor (15, 17), detecting the direction of orientation of the fish on the conveyor by means of a sensor (18, 19) and orientating the fish in the same direction by a means (20) controlled by the sensor, characterised in that the fish (14) are aligned and discharged in single file onto the conveyor (15, 17) by a shuffle feed apparatus (10) and then orientated in the same direction by a pivotable reversible conveyor (20) with two chutes (23, 24) sloping forwards from its upstream and downstream ends respectively to a further conveyor (25) below, the pivotable conveyor (20) being controlled by the sensor (18, 19) and tilting backwards or forwards about a transverse axis and reversing the conveying direction when tilting backwards.

## Patentansprüche

1. Vorrichtung zum Ausrichten von Fischen (14) in der gleichen Richtung, mit
- einem Förderer (15, 17), auf dem die Fische (14) in einer Linie angeordnet abgeladen werden,
- einem Sensor (18, 19) zur Erfassung der Ausrichtung der auf dem Förderer (15, 17) liegenden Fische (14), und
- einem von dem Sensor (18, 19) gesteuerten Mittel (20) zur Ausrichtung der Fische (14) in der gleichen Richtung,
dadurch gekennzeichnet,
daß als Mittel zur Anordnung und zum Abladen der Fische in einer Linie ein Rüttelaufgeber (10) verwendet wird und als von dem Sensor gesteuertes Mittel zur Ausrichtung der Fische in der gleichen Richtung ein kippbarer Umkehrförderer (20) sowie zwei Rutschen (23, 24), die von dessen vorderem bzw. hinterem Ende nach vorne unten zu einem weiteren Förderer (25) führen, verwendet werden,
wobei der kippbare Umkehrförderer (20) so ausgebildet ist, daß er um eine Querachse nach hinten oder vorne gekippt werden kann und rückwärts läuft, wenn er nach hinten gekippt wird.

2. Vorrichtung nach Anspruch 1, bei der der Rüttelaufgeber (10) mit speziell ausgebildeten Zufuhrelementen zum Transportieren der Fische versehen ist.

3. Vorrichtung nach Anspruch 1, bei der der Rüttelaufgeber (10) in einem Trichter (13) angebracht ist.

4. Vorrichtung nach Anspruch 1, bei der nach dem Förderer, auf dem die Fische in einer Linie angeordnet abgeladen werden, ein Beschleunigungsband (17) angeordnet ist.

5. Vorrichtung nach Anspruch 1, bei der der Sensor zwei übereinander angeordnete Fotozellen (18, 19) umfaßt, wobei die untere aktiviert wird, wenn sich das in Transportrichtung gesehen vordere Ende eines Fisches am Sensor vorbeibewegt, und die obere aktiviert wird, wenn sich der am weitesten oben gelegene Punkt eines Fisches am Sensor vorbeibewegt.

6. Vorrichtung nach Anspruch 5, bei der eine Steuerungsvorrichtung zur Feststellung der Zeitdifferenz zwischen der Aktivierung der beiden Fotozellen (18, 19) und zur entsprechenden Betätigung des Mittels (20) zur Ausrichtung der Fische in der gleichen Richtung vorgesehen ist.

7. Verfahren zur Anordnung und Ausrichtung von Fischen (14) in der gleichen Richtung und in einer Linie, umfassend
- die Anordnung und das Abladen der Fische auf einem Förderer (15, 17) in einer Linie,
- die Feststellung der Ausrichtung der auf dem Förderer liegenden Fische mittels eines Sensors (18, 19) sowie
- die Ausrichtung der Fische in der gleichen Richtung durch ein von dem Sensor gesteuertes Mittel (20),
dadurch gekennzeichnet,
daß die Fische (14) von einem Rüttelaufgeber (10) in einer Linie angeordnet auf dem Förderer (15, 17) abgeladen werden und anschließend von einem kippbaren Umkehrförderer (20) sowie zwei Rutschen (23, 24), die von dessen vorderem bzw. hinterem Ende nach vorne unten zu einem weiteren Förderer (25) führen, in der gleichen Richtung ausgerichtet werden, wobei der kippbare Umkehrförderer (20) von dem Sensor (18, 19) gesteuert wird und um eine Querachse nach hinten oder vorne gekippt wird und rückwärts läuft, wenn er nach hinten gekippt wird.

## Revendications

1. Machine pour orienter du poisson (14) dans le même sens, comportant
un transporteur (15, 17) destiné à recevoir du poisson (14) aligné et déchargé en une file unique,
un capteur (18, 19) destiné à détecter le sens de l'orientation du poisson (14) sur le transporteur (15, 17) et un moyen (20) commandé par le capteur (18, 19) pour orienter le poisson (14) dans le même sens, caractérisée en ce qu'un moyen pour l'alignement et le déchargement du poisson en une file unique est constitué par un appareil d'alimentation à battement (10) et le moyen commandé par le capteur pour orienter le poisson dans le même sens est constitué par un transporteur réversible pivotant (20) et deux goulottes (23, 24) s'inclinant vers l'avant à partir de ses extrémités d'amont et d'aval, respectivement, jusgu'à un autre transporteur (25) situé au-dessous,
le transporteur pivotant (20) étant conçu pour s'incliner vers l'arrière ou vers l'avant autour d'un axe transversal et pour inverser le sens de transport lorsqu'il est incliné vers l'arrière.

2. Machine selon la revendication 1, dans laquelle l'appareil (10) d'alimentation à battement est pourvu d'éléments d'alimentation de conception spéciale pour le transport du poisson.

3. Machine selon la revendication 1, dans laquelle l'appareil (10) d'alimentation à battement est monté dans une trémie (13).

4. Machine selon la revendication 1, dans laquelle une bande (17) à accélération est placée en aval du transporteur pour recevoir le poisson déchargé aligné en une file unique.

5. Machine selon la revendication 1, dans laquelle le capteur comporte deux cellules photoélectriques (18, 19) situées l'une au-dessus de l'autre, dont la plus basse est activée au passage de l'extrémité d'aval du poisson et la plus haute est activée lorsque le point le plus haut du poisson passe par le capteur.

6. Machine selon la revendication 5, dans laquelle un dispositif de commande est prévu pour enregistrer la différence de temps entre l'activation des deux cellules photoélectriques (18, 19) et pour actionner en conséquence le moyen (20) pour orienter le poisson dans le même sens.

7. Procédé pour aligner et orienter du poisson (14) dans le même sens en une file unique, qui consiste à aligner et décharger le poisson en une file unique sur un transporteur (15, 17), à détecter le sens d'orientation du poisson sur le transporteur au moyen d'un capteur (18, 19) et à orienter le poisson dans le même sens par un moyen (20) commandé par le capteur, caractérisé en ce que le poisson (14) est aligné et déchargé en une file unique sur le transporteur (15, 17) par un appareil (10) d'alimentation à battement, puis orienté dans le même sens par un transporteur réversible pivotant (20) avec deux goulottes (23, 24) s'inclinant vers l'avant depuis ses extrémités d'amont et d'aval, respectivement, jusqu'à un autre transporteur (25) situé au-dessous, le transporteur pivotant (20) étant commandé par le capteur (18, 19) et s'inclinant vers l'arrière ou vers l'avant autour d'un axe transversal et inversant le sens de transport lorsqu'il est incliné vers l'arrière.
